# EUROPÄISCHE PATENTSCHRIFT

(11) **EP 0 640 666 B1**
(45) Veröffentlichungstag und Bekanntmachung des Hinweises auf die Patenterteilung: **17.03.1999**
(21) Anmeldenummer: 94112182.4
(22) Anmeldetag: 04.08.1994
(51) Int. Cl.: C09B 29/42, D06P 3/54

(54) **Verfahren zum Färben von Polyester und polyesterhaltigen Textilmaterialien**
Process for dyeing polyester and polyester-containing textile materials
Procédé pour la teinture du polyester et de matériaux textiles contenant du polyester

(30) Priorität: 28.08.1993 DE 4329026
(43) Veröffentlichungstag der Anmeldung: 01.03.1995
(73) Patentinhaber: DyStar Textilfarben GmbH & Co. Deutschland KG, 60318 Frankfurt am Main (DE)
(72) Erfinder: Bühler, Ulrich, Dr., D-63755 Alzenau (DE); Zerrer, Ralf, Dr., D-63755 Alzenau (DE)

(56) Entgegenhaltungen:
- EP-A- 0 302 401
- EP-A- 0 413 229
- DE-A- 4 131 845
- FR-A- 2 160 583

## Beschreibung

Die vorliegende Erfindung betrifft ein Verfahren zum Färben von textilem Polyester oder polyesterhaltigen Textilmaterialien mit Hydroxypyridon-Azofarbstoffen.

In der Regel werden textiles Polyester oder polyesterhaltige Textilmaterialien mit Dispersionsfarbstoffen aus wäßrigem Färbebad bei HT-Bedingungen in einem Temperaturbereich von 120 bis 140°C bei pH-Werten von 4 bis 6 gefärbt, da bei höheren pH-Werten die Dispersionsfarbstoffe teilweise oder ganz zerstört werden. Bei höheren pH-Werten kommt es somit zu Farbstärkeverlusten und Farbtonabweichungen beim Färben und die Färbungen sind nicht reproduzierbar. Nun wird normalerweise die Polyesterfaser in einem separaten Schritt vor dem Färben einer alkalischen Spülbehandlung unterworfen, um Hilfsmittel, die beim Weben oder Spinnen der Faser eingesetzt worden sind, zu entfernen. Diese Hilfsmittel sind z.B. Ölungs- oder Schlichtemittel, die bei ihrem Vorhandensein ein egales Anfärben der Polyesterfaser erschweren oder unmöglich machen würden. Die alkalische Behandlung wird auch durchgeführt, um Oligomere der Polyesterfaser, die beim Färbevorgang aus dem Faserinneren herausgetreten sind und die Färbung unegal erscheinen lassen, zu zerstören und in der wäßrigen Färbeflotte zu halten. Die genannten Oligomere sind insbesondere beim Garnfärben unerwünscht, da sie sich beim Spinnen der gefärbten Garne in den Spinnapparaten an den Stellen, wo das Garn umgelenkt wird, durch Abrieb pulverartig absetzen. Sie verschmutzen so die Apparatur und führen dazu, daß das Garn reißt.

Diese alkalische Spülbehandlung wird zweckmäßigerweise bei erhöhter Temperatur durchgeführt. Um Zeit und Energie zu sparen und um die Anzahl der für beide Prozesse, alkalische Vorbehandlung und Färben, benötigten Apparate zu reduzieren, war es schon immer das Ziel, beide Prozesse zu einem Ein-Bad-Spül- und Färbeverfahren zu vereinigen. Zur Realisierung dieses Zieles müssen allerdings Verfahren entwickelt werden, die im wäßrigen Färbebad bei pH 8 bis pH 11 reproduzierbare Färbungen ergeben.

Polyester-Zellulose- bzw. Polyester-Polyamid-Mischgewebe werden mit Dispersions- bzw. Reaktivfarbstoffen aus wäßrigem Färbebad in der Regel in zwei Färbeschritten gefärbt. Wie oben erwähnt, werden dabei die Dispersionsfarbstoffe auf den Polyesteranteil bei pH 4 bis 6 appliziert, die Reaktivfarbstoffe auf den Zellulose- bzw. Polyamid-Anteil im pH-Bereich zwischen pH 11 und 13. Auch hier war es in der Vergangenheit das Ziel, ein einbadiges Applikationsverfahren für beide Farbstoffklassen zu entwickeln. Hierfür hat man nach Reaktivfarbstoffen gesucht, mit denen bereits bei pH-Werten zwischen 8 und 11 gefärbt werden kann, und es waren auch hier Verfahren erforderlich, die sicherstellen, daß unter diesen Bedingungen der Polyesteranteil mit Dispersionsfarbstoffen reproduzierbar gefärbt werden kann.

Zur Behandlung der Mängel bisheriger Verfahren wird in der DOS 39 38 631 eine Methode beschrieben, bei der mit Dispersionsfarbstoffen im pH-Bereich zwischen pH 8 und 10 in Gegenwart mindestens einer, gegebenenfalls am Stickstoff substituierter Aminosäure und/oder eines Alkalimetallsalzes einer gegebenenfalls am Stickstoff substituierten Aminosäure gefärbt wird. Allerdings führt dieses Verfahren bei der Herstellung von gelben Färbungen mit den derzeit auf dem Markt befindlichen Hydroxypyridon-Azofarbstoffen nicht zu befriedigenden Ergebnissen, sondern zu Einbußen an Farbstärke und Brillanz. Die genannten Hydroxypyridon-Azofarbstoffe, insbesondere die in DE-A 20 01 821 und DE-A 31 20 747 beschriebenen, sind nämlich aufgrund ihrer acidifizierten Hydroxygruppen zu alkaliempfindlich. Dies zeigt sich auch schon daran, daß diverse Hydroxypyridon-Azofarbstoffe als für den alkalischen Ätzdruck gut geeignet empfohlen werden. Beim alkalischen Ätzdruck wird der Farbstoff an den Stellen, wo er auf das zu bedruckende Gewebe aufgebracht und vor dem Fixieren mit Alkali in Berührung gebracht wird, zerstört und kann an diesen Stellen das Gewebe nicht einfärben.

Aufgabe der vorliegenden Erfindung ist es deshalb, alkalistabile Farbstoffe bereitzustellen, die Gelbfärbungen in guter Qualität reproduzierbar und ohne unökonomischen Mehreinsatz von Farbstoff bzw. unökologisch höhere Belastung des Färbereiabwassers durch hydrolysierte Farbstoffe liefern.

Es wurde nun überraschenderweise gefunden, daß ausgewählte Hydroxypyridon-Azofarbstoffe diese Aufgabe lösen. Diese Hydroxypyridon-Azofarbstoffe sind teilweise bereits aus der DE-A 21 57 229, DE-A 39 27 069, DE-A 41 31 845 und EP-A 302 401 bekannt, allerdings ohne daß ihre besondere Eignung für die Alkali färberei bekannt oder naheliegend gewesen wäre.

Die Erfindung betrifft somit ein Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 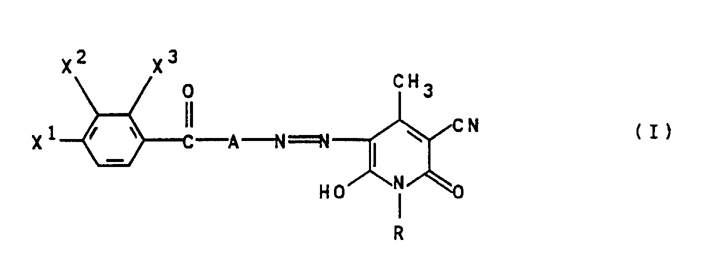 einsetzt, worin
A 1,4-Phenylen oder 1,3-Phenylen;
R lineares (C₁-C₆)-Alkyl oder (C₁-C₄)-Alkoxy-(C₂-C₄)-alkyl;
X¹ Wasserstoff oder (C₁-C₄)-Alkyl; und
X² und X³ unabhängig voneinander Wasserstoff oder Methyl bedeuten.

Alkylreste können, soweit nicht ausdrücklich anders angegeben, linear oder verzweigt sein. Beispiele sind Methyl, Ethyl, n-Propyl, i-Propyl, n-Butyl, i-Butyl, n-Pentyl und n-Hexyl. Beispiele für die für R stehende Alkoxyalkylgruppe sind 2-Methoxy-, 2-Ethoxy-, 2-n-Propoxy-, 2-i-Propoxy-, 2-n-Butoxy- und 2-i-Butoxyethyl, 3-Methoxy-, 3-Ethoxy-, 3-n-Propoxy-, 3-i-Propoxy-, 3-n-Butoxy- und 3-i-Butoxypropyl, 2-Methoxypropyl sowie 4-Methoxy- und 4-Ethoxybutyl.

Das erfindungsgemäße Verfahren wird bevorzugt ausgeführt mit Farbstoffen der allgemeinen Formel I, in denen A für 1,4-Phenylen steht.

Bevorzugt sind auch Farbstoffe, in denen R Ethyl, n-Propyl oder n-Butyl bedeuten.

Hinsichtlich der Reste X¹ bis X³ sind solche Farbstoffe bevorzugt, in denen X¹ und einer der Reste X² und X³ Methyl bedeuten und solche, in denen X² und X³ für Wasserstoff und X¹ für Ethyl oder insbesondere für i-Propyl stehen.

Bevorzugt sind weiterhin Farbstoffe, in denen die Summe der Kohlenstoffatome in den Resten R und X¹ bis X³ 4 bis 7 ist.

Besonders bevorzugt werden Farbstoffe der allgemeinen Formel I eingesetzt, die mehrere der obengenannten bevorzugten Merkmale aufweisen.

Die vorliegende Erfindung betrifft auch Monoazofarbstoffe der allgemeinen Formel Ia 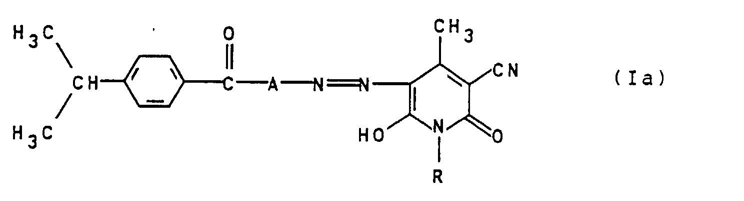 worin
A 1,4-Phenylen oder 1,3-Phenylen und
R Ethyl, n-Propyl oder n-Butyl bedeuten.

Die Farbstoffe der allgemeinen Formel Ia waren bisher noch nicht bekannt und sind den strukturell nächstliegenden Verbindungen des Standes der Technik hinsichtlich ihrer färberischen Eigenschaften überlegen.

In bevorzugten Farbstoffen der allgemeinen Formel Ia steht A für 1,3-Phenylen.

Die Farbstoffe der allgemeinen Formel Ia können analog den in obengenanntem Stand der Technik beschriebenen Verfahren hergestellt werden. Insbesondere können sie dadurch hergestellt werden, daß ein Amin der allgemeinen Formel IV 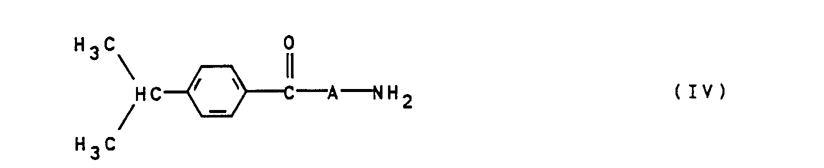 worin A wie oben angegeben definiert ist, in an sich bekannter Weise diazotiert und auf ein Hydroxypyridon der allgemeinen Formel V 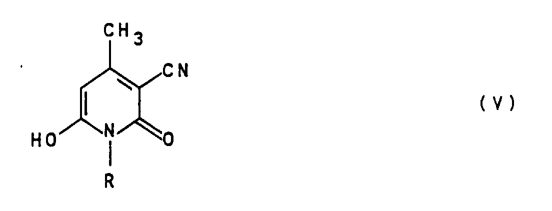 worin R wie oben angegeben definiert ist, gekuppelt wird.

Das erfindungsgemäße Verfahren kann mit einem Farbstoff der allgemeinen Formel I bzw. Ia ausgeführt werden. Es kann aber auch mit zwei oder mehreren Farbstoffen der allgemeinen Formel I bzw. Ia ausgeführt werden, wobei aber zwei Farbstoffe bevorzugt sind. Der Anteil eines Farbstoffs in diesen Fällen beträgt bevorzugt 5 bis 80 Gew.%, besonders bevorzugt 20 bis 50 Gew.%, jeweils bezogen auf die Gesamtfarbstoffmenge.

Das erfindungsgemäße Verfahren wird bevorzugt unter HT-Bedingungen ausgeführt, d.h. in wäßriger Färbeflotte bei Temperaturen zwischen 120°C und 140°C in einem Färbeautoklaven. Der pH-Wert liegt bevorzugt bei pH 9 bis pH 10.

Die erfindungsgemäßen Farbstoffe der allgemeinen Formel Ia können nicht nur im erfindungsgemäßen Verfahren, sondern auch in anderen üblichen Verfahren zum Färben und Bedrucken von hydrophoben synthetischen Textilmaterialien, z.B. unter HT-Bedingungen im pH-Bereich zwischen 4 und 11, im sogenannten Thermosol-Prozess, eingesetzt werden oder aber nach einem Druckprozeß auf die Faser appliziert werden.

Die nach dem erfindungsgemäßen Verfahren zu färbenden Polyester sind insbesondere solche auf Basis von Polyethylenglykolterephthalaten. Polyesterhaltige Textilmaterialien sind z.B. Mischungen aus Polyester und Polyamiden.

Bei dem erfindungsgemäßen Verfahren werden die Farbstoffe oder Farbstoffmischungen in feiner Verteilung eingesetzt. Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 25 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Der erforderliche pH-Wert der Färbeflotte wird vor bzw. auch während des Färbens durch Zugabe von Basen wie Alkalihydroxiden, z.B. wäßriger Natronlauge, Alkalihydrogencarbonaten, z.B. Natriumhydrogencarbonat oder Alkalicarbonaten z.B. Soda, eingestellt.

Um pH-Schwankungen zu minimieren, werden vorzugsweise Puffersubstanzen zugesetzt, wie sie z.B. in JSDC 77 (1979), S. 47, oder JSDC 79 (1981), S. 115, beschrieben sind. Besonders geeignete Puffersubstanzen sind solche, die im pH-Bereich zwischen 9 und 11 die größte Pufferwirkung besitzen. Geeignete Puffersysteme sind z.B. Essigsäure/Natriumpyrophosphat, Borsäure/Borax, Natriumdihydrogenphosphat/Dinatriumhydrogenphosphat, Phosphorsäure/ Bernsteinsäure/Borsäure oder Kombinationen organischer Phosphorverbindungen mit Polycarbonsäuren. Die Einsatzmengen an Puffersystem liegen vorzugsweise zwischen 0,5 und 10 g/l.

### Beispiel 1

1,5 g einer 20 %igen Pulverpräparation des Farbstoffs der Formel Ib 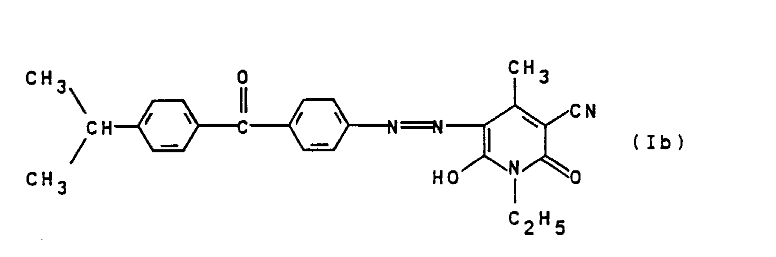 werden in einem Färbeautoklaven aus einer Färbeflotte bestehend aus 2 1 Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 min bei 130°C auf 100 g eines Gewebes aus Polyethylenterephthalat gefärbt, nachdem vorher der pH-Wert der Färbeflotte mit wäßriger Natronlauge auf 9,5 gestellt wurde. Danach wird die Färbung gespült, reduktiv gereinigt, sowie gespült und getrocknet. Man erhält so eine gelbe Färbung mit klarem Farbton.

### Vergleichsversuch 1:

Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung ist praktisch farbstärke- und farbtongleich, der Farbstoff hat sich bei pH 4,5 praktisch nicht zersetzt.

### Vergleichsversuch 2:

Die oben beschriebenen Färbungen bei pH 9,5 und 4,5 werden wiederholt, wobei aber anstelle des Farbstoffs der Formel Ib der aus der DE-A 31 20 747 bekannte Farbstoff der Formel III 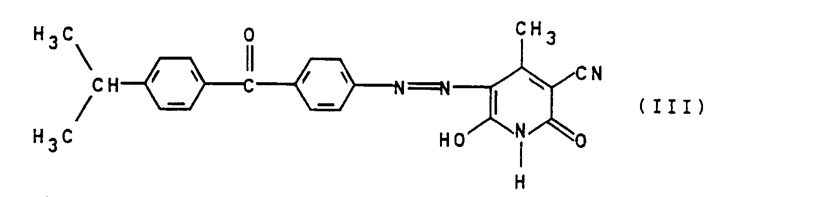 eingesetzt wird. Man erhält bei pH 9,5 eine Färbung, deren Farbtiefe nur ca. 70 % der Farbtiefe beträgt, die bei pH 4,5 erzielt wird.

### Beispiel 2

15 g des Farbstoffs der Formel Ib werden in feiner Verteilung einer Druckpaste, die 45 g Johannisbrotkernmehl, 6 g 3-Nitrobenzolsulfonsaures Natrium und 3 g Zitronensäure auf 100 g enthält, einverleibt. Wird Polyester mit dieser Druckpaste bedruckt, das bedruckte Gewebe nach dem Trocknen 15 min bei 1,5 atü Dampfdruck gedämpft, geseift, gespült und getrocknet, so erhält man einen farbstarken gelben Druck mit hervorragenden Echtheiten.

Die nachfolgende Tabelle 1 nennt weitere erfindungsgemäße Farbstoffe der allgemeinen Formel Ia, die entsprechend den vorstehenden Beispielen 1 und 2 verwendet werden können:

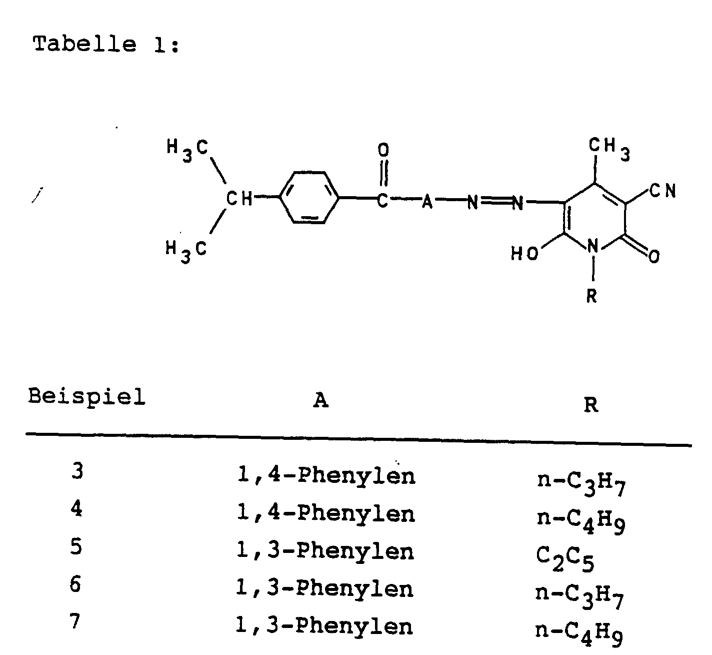

Die nachfolgende Tabelle 2 nennt weitere Farbstoffe der allgemeinen Formel I, die analog Beispiel 1 für das erfindungsgemäße Verfahren verwendet werden können:

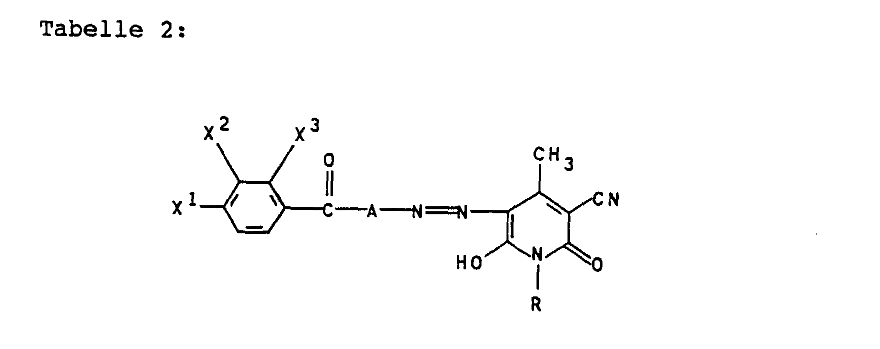

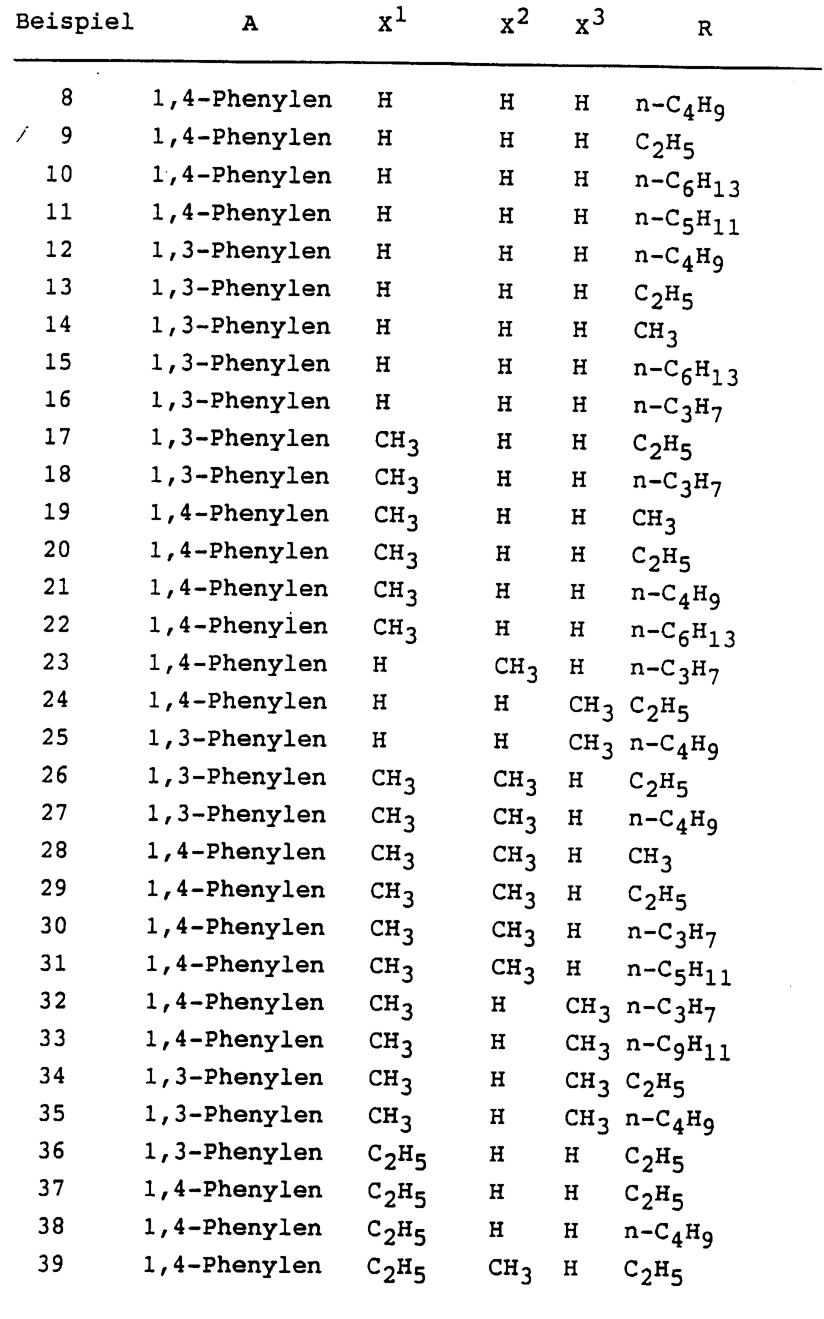

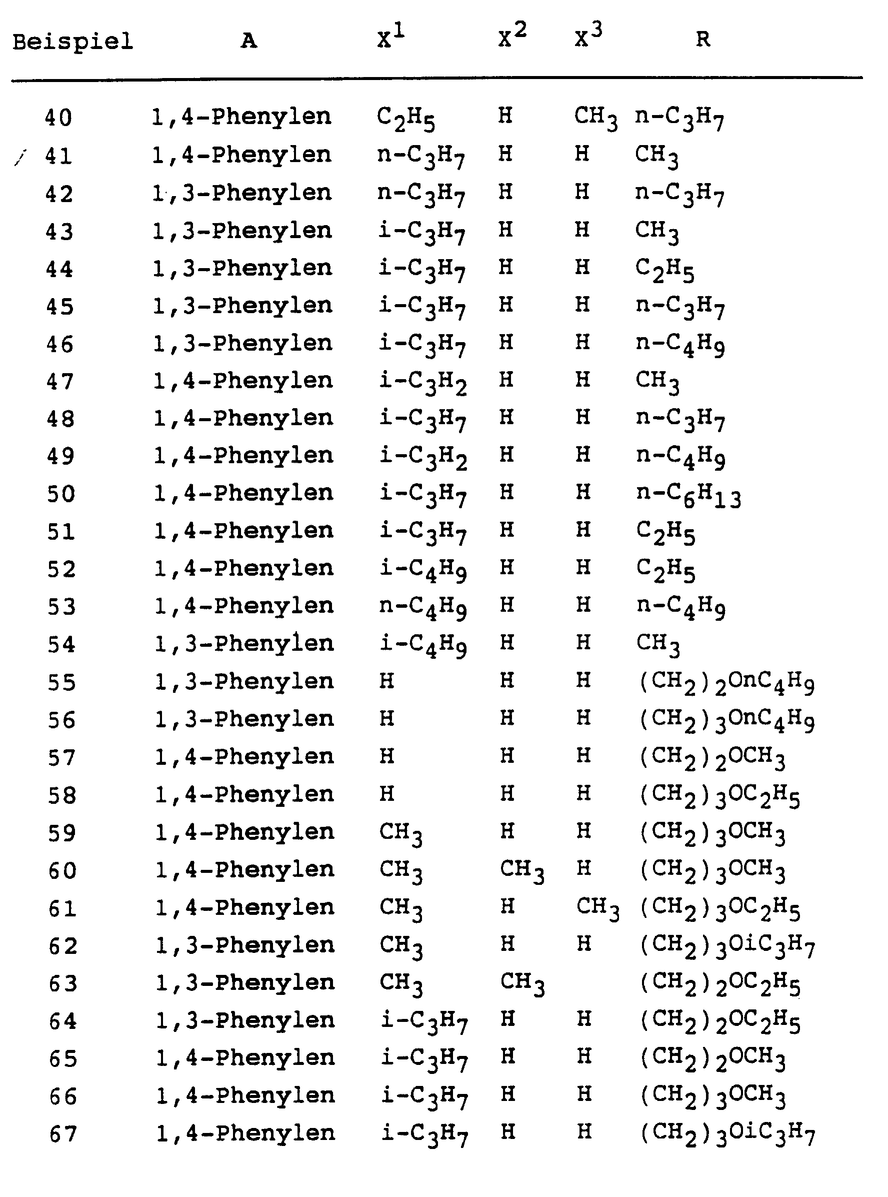

## Patentansprüche

1. Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 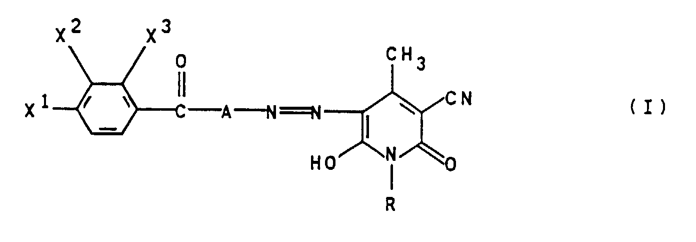 einsetzt, worin
A 1,4-Phenylen oder 1,3-Phenylen;
R lineares (C₁-C₆)-Alkyl oder (C₁-C₄)-Alkoxy-(C₂-C₄)-alkyl;
X¹ Wasserstoff oder (C₁-C₄)-Alkyl; und
X² und X³ unabhängig voneinander Wasserstoff oder Methyl bedeuten.

2. Verfahren gemäß Anspruch 1, dadurch geknnzeichnet, daß A für 1,4-Phenylen steht.

3. Verfahren gemäß Anspruch 1 und/oder 2, dadurch gekennzeichnet, daß R Ethyl, n-Propyl oder n-Butyl bedeuten.

4. Verfahren gemäß einem oder mehreren der Ansprüche 1 bis 3, dadurch gekennzeichnet, daß X¹ und einer der Reste X² und X³ Methyl bedeuten.

5. Verfahren bemäß einem oder mehreren der Ansprüche 1 bis 4, dadurch gekennzeichnet, daß X² und X³ für Wasserstoff und X¹ für Ethyl und insbesondere für i-Propyl steht.

6. Verfahren gemäß einem oder mehreren der Ansprüche 1 bis 5, dadurch gekennzeichnet, daß es unter HT-Bedinungen in wäßriger Färbeflotte bei Temperaturen zwischen 120°C und 140°C in einem Färbeautoklaven ausgeführt wird.

7. Verfahren gemäß einem oder mehreren der Ansprüche 1 bis 6, dadurch gekennzeichnet, daß es bei pH 9 bis pH 10 ausgeführt wird.

8. Monoazofarbstoffe der allgemeinen Formel Ia 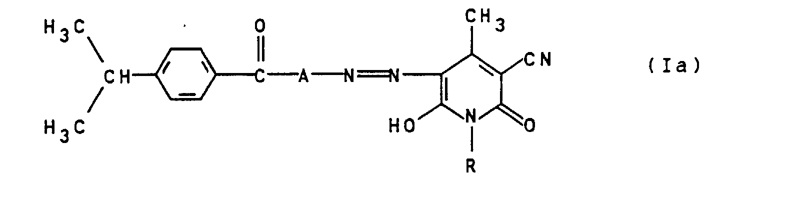 worin
A 1,4-Phenylen oder 1,3-Phenylen und
R Ethyl, n-Propyl oder n-Butyl bedeuten.

9. Verfahren zur Herstellung von Monoazofarbstoffen der allgemeinen Formel Ia gemäß Anspruch 8, dadurch gekennzeichnet, daß ein Amin der allgemeinen Formel IV 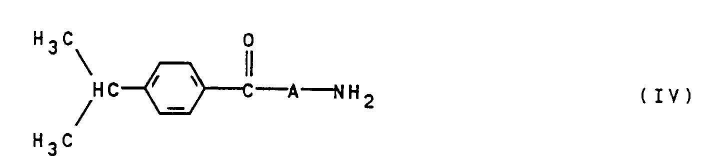 worin A wie in Anspruch 8 angegeben definiert ist, in an sich bekannter Weise diazotiert und auf ein Hydroxypyridon der allgemeinen Formel V 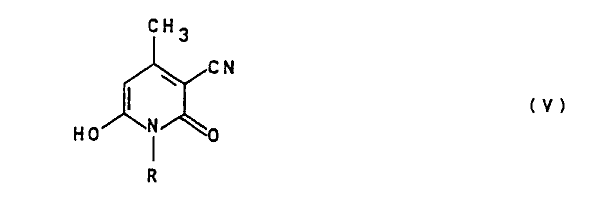 worin R wie in Anspruch 8 angegeben definiert ist, gekuppelt wird.

10. Verwendung von Monoazofarbstoffen der allgemeinen Formel Ia gemäß Anspruch 8 zum Färben und Bedrucken von hydrophoben Textilmaterialen.

## Claims

1. Process for dyeing polyester or polyester-containing textile materials at pH 8 to pH 11, characterized in that there are used one or more monoazo dyestuffs of the general formula I 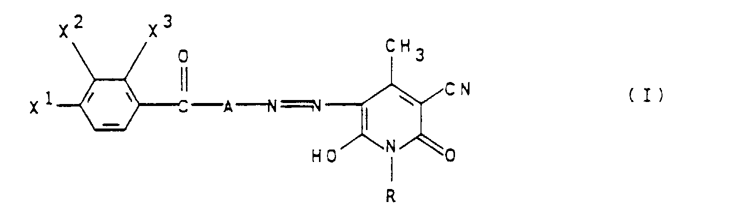 in which
A denotes 1,4-phenylene or 1,3-phenylene;
R denotes linear (C₁-C₆)-alkyl or (C₁-C₄)-alkoxy-(C₂-C₄)-alkyl;
X¹ denotes hydrogen or (C₁-C₄)-alkyl; and
X² and X³, independently of one another, denote hydrogen or methyl.

2. Process according to Claim 1, characterized in that A represents 1,4-phenylene.

3. Process according to Claim 1 and/or 2, characterized in that R denotes ethyl, n-propyl or n-butyl.

4. Process according to one or more of Claims 1 to 3, characterized in that X¹ and one of the radicals X² and X³ denote methyl.

5. Process according to one or more of Claims 1 to 4, characterized in that X² and X³ represent hydrogen and X¹ represents ethyl and, in particular, i-propyl.

6. Process according to one or more of Claims 1 to 5, characterized in that it is carried out under HT conditions in an aqueous dyeing liquor at temperatures of between 120°C and 140°C in a dyeing autoclave.

7. Process according to one or more of Claims 1 to 6, characterized in that it is carried out at pH 9 to pH 10.

8. Monoazo dyestuffs of the general formula Ia 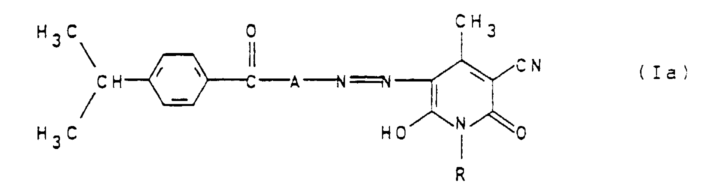 in which
A denotes 1,4-phenylene or 1,3-phenylene and
R denotes ethyl, n-propyl or n-butyl.

9. Process for preparing monoazo dyestuffs of the general formula Ia according to Claim 8, characterized in that an amine of the general formula IV 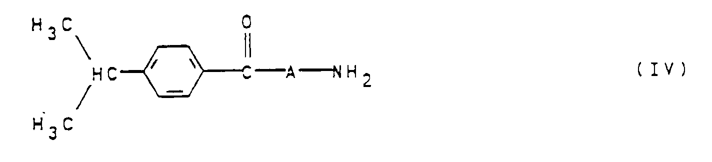 in which A is as defined in Claim 8 is diazotized in a manner known per se, and the resulting diazonium salt is coupled on to a hydroxypyridone of the general formula V 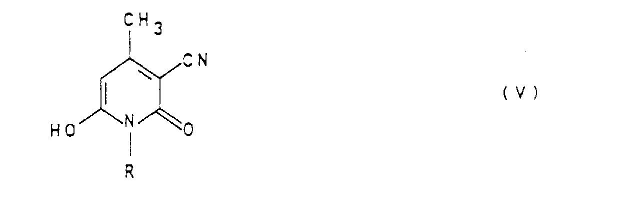 in which R is as defined in Claim 8.

10. Use of monoazo dyestuffs of the general formula Ia according to Claim 8 for dyeing and printing hydrophobic textile materials.

## Revendications

1. Procédé de coloration de polyesters ou de matériaux textiles contenant des polyesters à des pH de 8 à 11, caractérisé en ce qu'on utilise un ou plusieurs colorants monoazoïques de formule générale I 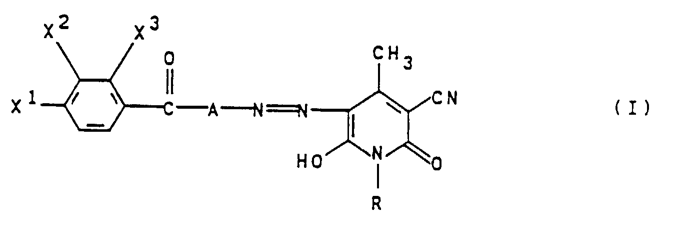 dans laquelle
A est un groupe 1,4-phénylène ou 1,3-phénylène;
R est un groupe alkyle (C₁-C₆) linéaire ou alkoxy (C₁-C₄) alkyle (C₂-C₄);
X¹ est de l'hydrogène ou un groupe alkyle (C₁-C₄) ; et
X² et X³ désignent, indépendamment l'un de l'autre, de l'hydrogène ou un groupe méthyle.

2. Procédé selon la revendication 1, caractérisé en ce que A est un groupe 1,4-phénylène.

3. Procédé selon la revendication 1 et/ou 2, caractérisé en ce que R désigne un groupe éthyle, n-propyle ou n-butyle.

4. Procédé selon une ou plusieurs des revendications 1 à 3, caractérisé en ce que X¹ et un des radicaux X² et X³ désignent un groupe méthyle.

5. Procédé selon une ou plusieurs des revendications 1 à 4, caractérisé en ce que X² et X³ sont de l'hydrogène et X¹ est un groupe éthyle, en particulier un groupe i-propyle.

6. Procédé selon une ou plusieurs des revendications 1 à 5, caractérisé en ce qu'il est réalisé dans des conditions de températures élevées dans un bain de colorant aqueux à des températures comprises entre 120°C et 140°C dans un autoclave à colorant.

7. Procédé selon une ou plusieurs des revendications 1 à 6, caractérisé en ce qu'il est réalisé à un pH de 9 à 10.

8. Colorants monoazoïques de formule générale Ia 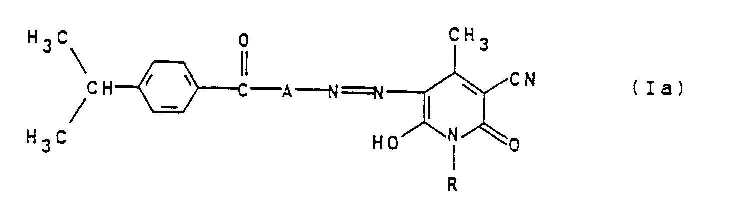 dans laquelle
A désigne un groupe 1,4-phénylène ou 1,3-phénylène et
R désigne un groupe éthyle, n-propyle ou n-butyle.

9. Procédé de préparation de colorants monoazoïques de formule générale Ia selon la revendication 8, caractérisé en ce que l'on diazote de manière connue en soi une amine de formule générale IV 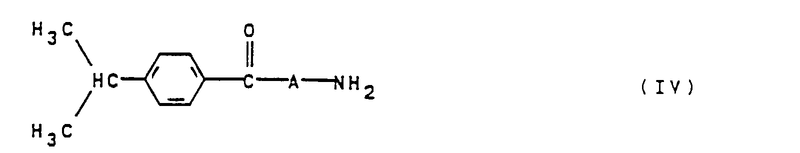 dans laquelle A est défini comme indiqué dans la revendication 8, et en ce qu'on la couple ensuite sur une hydroxypyridone de formule générale V 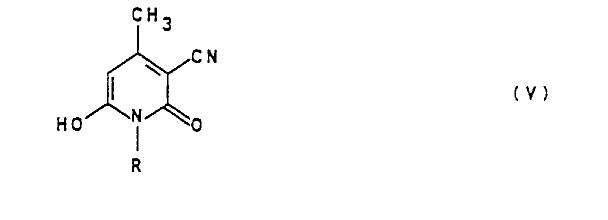 dans laquelle R est défini comme indiqué dans la revendication 8.

10. Utilisation de colorants monoazoïques de formule générale Ia selon la revendication 8 pour la coloration et l'impression de matériaux textiles hydrophobes.
